# EUROPÄISCHE PATENTSCHRIFT

(11) **EP 3 702 130 B1**
(45) Veröffentlichungstag und Bekanntmachung des Hinweises auf die Patenterteilung: **18.05.2022**
(21) Anmeldenummer: 19159596.6
(22) Anmeldetag: 27.02.2019
(51) Int. Cl.: B29C 64/124, B29C 64/264, B29C 64/393, B33Y 30/00, B33Y 50/02

(54) **STEREOLITHOGRAFIEGERÄT UND EIN VERFAHREN ZUM EINSTELLEN EINES STEREOLITHOGRAFIEGERÄTES**
STEREOLITHOGRAPHY DEVICE AND METHOD FOR ADJUSTING A STEREOLITHOGRAPHY DEVICE
APPAREIL DE STÉRÉOLITHOGRAPHIE ET PROCÉDÉ D'AJUSTEMENT D'UN APPAREIL DE STÉRÉOLITHOGRAPHIE

(43) Veröffentlichungstag der Anmeldung: 02.09.2020
(73) Patentinhaber: Ivoclar Vivadent AG, 9494 Schaan (LI)
(72) Erfinder: WETTSTEIN, Markus, 8952 Schlieren (CH); GEISSBUEHLER, Stefan, 8952 Schlieren (CH)
(74) Vertreter: Baldus, Oliver

(56) Entgegenhaltungen:
- EP-A1- 1 894 704
- EP-A1- 3 470 210
- WO-A1-2013/170311
- US-A1- 2018 186 066

## Beschreibung

Die vorliegende Erfindung betrifft ein Stereolithografiegerät und ein Verfahren zum Einstellen eines Stereolithografiegerätes.

Die Stereolithografie (SLA) ist ein dreidimensionales Druckverfahren, bei dem ein Werkstück aus einem Flüssigbad aus einem Photopolymer schrittweise aufgebaut wird, oder das Werkstück in einem Flüssigbad mittels einer Bauplattform erstellt wird. Die Bauplattform wird zunächst in das Flüssigkeitsbad eingeführt und nach einem Bilden einzelner Schichten aus dem Flüssigkeitsbad ausgeführt. Anschließend wird die Bauplattform wieder ins Flüssigbad eingeführt, bis das gewünschte Objekt hergestellt ist. Ein Lichtmuster wird bei jedem Schritt auf das Photopolymer projiziert. An den Stellen, an denen das Lichtmuster auf das Photopolymer trifft, härtet dieses aus. Auf diese Weise kann das Werkstück schichtweise mit der gewünschten Form hergestellt werden.

Eine Ultraviolett-Lichtquelle (z.B. LED) des Stereolithografiegerätes ist über die geforderte Lebensdauer von Alterungseffekten betroffen, so dass die Lichtintensität bei gleichbleibendem elektrischem Strom abnimmt. Auch andere Komponenten im Lichtpfad, wie Prismen, Linsen, Lichtmischstäbe und elektronische Spiegelgeräte, zeigen durch die hohe Bestrahlung mit UV-Licht Degradierungseffekte, die sich in einer verminderten Bestrahlungsintensität auf dem Baufeld manifestieren. Für die Qualität des Bauprozesses ist es jedoch von entscheidender Wichtigkeit, dass die Lichtintensität über die gesamte Lebensdauer des Stereolithografiegerätes konstant bleibt. Die Druckschrift EP 18 190 700.7 betrifft ein Verfahren zum schichtweisen Aufbau eines Formkörpers durch stereolithographisches Aushärten von photopolymerisierbarem Material in aufeinanderfolgenden Schichten durch Belichten mittels einer Belichtungseinheit.

Die Druckschrift EP 1 894 704 A1 betrifft eine Technik, um eine verbesserte Wandglattheit und Merkmalsgenauigkeit in einem Bildprojektionssystem zu erhalten, die durch die projizierte Größe der Bildpunkte erhalten wird.

Die Druckschrift WO 2013/170311 A1 betrifft ein Gerät zum Herstellen eines Objekts. Das Gerät umfasst eine Strahlungsquelle, wie zum Beispiel eine Leuchtdiode. Ein Prisma richtet die Strahlung auf einen räumlichen Lichtmodulator (Spatial Light Modulator - SLM), wie beispielsweise ein DLP mikro-elektromechanisches System (MEMS).

Die Druckschrift EP 3 470 210 A1 (Stand der Technik nach Art. 54(3) EPÜ) betrifft ein 3D-Druckgerät. Das 3D-Druckgerät umfasst eine Lichtquelle 110 und ein digitales Spiegelgerät. Ein Teil des Lichtes trifft auf erste Mikrospiegel auf, die diesen Teil auf die Arbeitsflüssigkeit lenken, um diese Auszuhärten und das 3D-Druckobjekt zu erzeugen.

Die Druckschrift US 2018/186066 A1 betrifft ein Gerät zum Herstellen eines dreidimensionalen Artikels. Eine Lichtmaschine 10 ist konfiguriert, um ein Pixelbild auf eine Aufbauebene zu projizieren. Ein Sensor erfasst die Intensität für jeden Pixel in der gesamten Aufbauebene.

Das Problem wurde bisher entweder ignoriert oder mit einer Alterungskompensation gelöst, bei der die Belichtungszeit und/oder die Stromstärke der Lichtquelle mit einer fest hinterlegten Charakteristik über die Dauer angepasst werden. Die hinterlegte Charakteristik berücksichtigt jedoch die Exemplarstreuung der verwendeten Komponenten nicht. Die Steuerung der Lichtintensität über die Alterungscharakteristik der Lichtquelle und das nicht-vorhersehbare Alterungsverhalten des restlichen Lichtpfads ist daher ungenau.

Es ist daher die technische Aufgabe der vorliegenden Erfindung, eine Lichtintensität in einem Stereolithografiegerät mit hoher Genauigkeit über die Lebensdauer hinweg aufrecht zu erhalten.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird diese Aufgabe durch ein Stereolithografiegerät gelöst, mit einer Lichtquelle zum Aussenden von Licht zum Aushärten eines lichtaushärtenden Materials; einem Sensor zum Bestimmen eines Istwertes der Lichtintensität des ausgesandten Lichtes; und einer Steuereinheit zum Anpassen des elektrischen Stromes durch die Lichtquelle bis der Istwert der Lichtintensität einen vorgegebenen Sollwert erreicht, wobei das Stereolithografiegerät ausgebildet ist, das Licht von der Lichtquelle zum Sensor über ein digitales Spiegelgerät umzulenken, das zur Projektion eines Lichtmusters auf das lichtaushärtende Material dient. Da der Sensor keine Alterungserscheinungen aufweist, kann die Lichtintensität mittels eines geschlossenen Regelkreises (Closed Loop) auf exakt den vorgegebenen Sollwert der Lichtintensität eingeregelt werden. Dadurch können auch Alterungserscheinungen mittels Ausgasungen bei Bestrahlung oder Erwärmung von Kunststoffteilen, allgemeiner Umwelteinflüsse oder Ablagerungen beim Herstellprozess der übrigen Komponenten, wie Prismen, Linsen, Lichtmischstäbe und des digitalen Spiegelgeräts (DMD), innerhalb des Lichtpfades kompensiert werden. Es wird eine zeitlich konstante Lichtintensität und eine erhöhte Lebensdauer des Stereolithografiegerätes erreicht. Dadurch wird beispielsweise der technische Vorteil erreicht, dass das Licht bedarfsweise auf einen Auskopplungslichtpfad gelenkt werden kann und sich die Lebensdauer des Sensors erhöht.

In einer weiteren technisch vorteilhaften Ausführungsform des Stereolithografiegerätes ist das digitale Spiegelgerät benachbart zu einer Prismafläche angeordnet. Dadurch wird beispielsweise der technische Vorteil erreicht, dass die Bauform des Stereolithografiegerätes verkleinert werden kann.

In einer weiteren technisch vorteilhaften Ausführungsform des Stereolithografiegerätes ist das Stereolithografiegerät ausgebildet, ein vorgegebenes Lichtmuster durch das digitales Spiegelgerät auf den Sensor zu projizieren. Dadurch wird beispielsweise der technische Vorteil erreicht, dass die Lichtmenge auf den Sensor genau dosiert werden kann.

In einer weiteren technisch vorteilhaften Ausführungsform des Stereolithografiegerätes umfasst das Stereolithografiegerät eine Spiegelfläche zum Umlenken des Lichts auf den Sensor. Dadurch wird beispielsweise der technische Vorteil erreicht, dass der Sensor flexibel an unterschiedlichen Positionen im Inneren des Stereolithografiegerätes angeordnet werden kann.

In einer weiteren technisch vorteilhaften Ausführungsform des Stereolithografiegerätes ist die Spiegelfläche benachbart zu einer Prismablende angeordnet. Dadurch wird beispielsweise der technische Vorteil erreicht, dass die Prismablende eine vorgegebene Austrittsöffnung definiert und ungewolltes Streulicht reduziert wird.

In einer weiteren technisch vorteilhaften Ausführungsform des Stereolithografiegerätes ist der Sensor speziell zum Erfassen von ultraviolettem Licht ausgebildet. Dadurch wird beispielsweise der technische Vorteil erreicht, dass eine hohe Lebensdauer des Sensors erreicht wird.

In einer weiteren technisch vorteilhaften Ausführungsform des Stereolithografiegerätes ist der Sensor durch eine Photodiode gebildet. Dadurch wird beispielsweise der technische Vorteil erreicht, dass der Sensor kostengünstig ist und gleichzeitig geringe Alterungserscheinungen aufweist.

In einer weiteren technisch vorteilhaften Ausführungsform des Stereolithografiegerätes umfasst die Steuereinheit einen Regler zum Regeln des Stromes durch die Lichtquelle, wie beispielsweise einen PID-Regler oder PI-Regler. Dadurch wird beispielsweise der technische Vorteil erreicht, dass eine schnelle und effiziente Regelung des Regelkreises durchgeführt wird.

Gemäß einem zweiten Aspekt wird diese Aufgabe durch ein Verfahren zum Einstellen eines Stereolithografiegerätes gelöst, mit den Schritten eines Aussendens von Licht zum Aushärten eines lichtaushärtenden Materials mittels einer Lichtquelle; eines Bestimmens eines Istwertes der Lichtintensität des ausgesandten Lichtes; und eines Anpassens des elektrischen Stromes durch die Lichtquelle bis der Istwert der Lichtintensität einen vorgegebenen Sollwert erreicht. Durch das Verfahren werden die gleichen technischen Vorteile wie durch das Stereolithografiegerät nach dem ersten Aspekt erreicht, wobei das Licht von der Lichtquelle zum Sensor durch ein digitales Spiegelgerät umgelenkt, das zur Projektion eines Lichtmusters auf das lichtaushärtende Material dient. Dadurch wird beispielsweise ebenfalls der technische Vorteil erreicht, dass das Licht bedarfsweise auf einen Auskopplungslichtpfad gelenkt werden kann und sich die Lebensdauer des Sensors erhöht.

In einer weiteren technisch vorteilhaften Ausführungsform des Verfahrens wird ein vorgegebenes Lichtmuster durch das digitale Spiegelgerät auf den Sensor projiziert. Dadurch wird beispielsweise ebenfalls der technische Vorteil erreicht, dass das auf den Sensor eintreffende Licht dosiert werden kann.

In einer weiteren technisch vorteilhaften Ausführungsform des Verfahrens wird das Licht über eine Spiegelfläche auf den Sensor umgelenkt. Dadurch wird beispielsweise ebenfalls der technische Vorteil erreicht, dass der Sensor flexibel an unterschiedlichen Positionen im Inneren des Stereolithografiegerätes angeordnet werden kann.

In einer weiteren technisch vorteilhaften Ausführungsform des Verfahrens wird der Strom durch einen Regler auf den Sollwert geregelt wird, wie beispielsweise einem PID-Regler.

Dadurch wird beispielsweise ebenfalls der technische Vorteil erreicht, dass eine schnelle und effiziente Regelung des Regelkreises durchgeführt wird.

In einer weiteren technisch vorteilhaften Ausführungsform des Verfahrens wird das Licht durch eine Prismablende geführt. Dadurch wird beispielsweise ebenfalls der technische Vorteil erreicht, dass die Prismablende eine vorgegebene Austrittsöffnung definiert und das Bestimmen des Istwertes bei unterschiedlichen Messungen in vergleichbarer Weise durchgeführt wird. Ausführungsbeispiele der Erfindung sind in den Zeichnungen dargestellt und werden im Folgenden näher beschrieben.

Es zeigen:
- Fig. 1: eine schematische Darstellung eines Stereolithografiegerätes; und
- Fig. 2: ein Blockdiagramm eines Verfahrens zum Einstellen eines Stereolithografiegerätes.

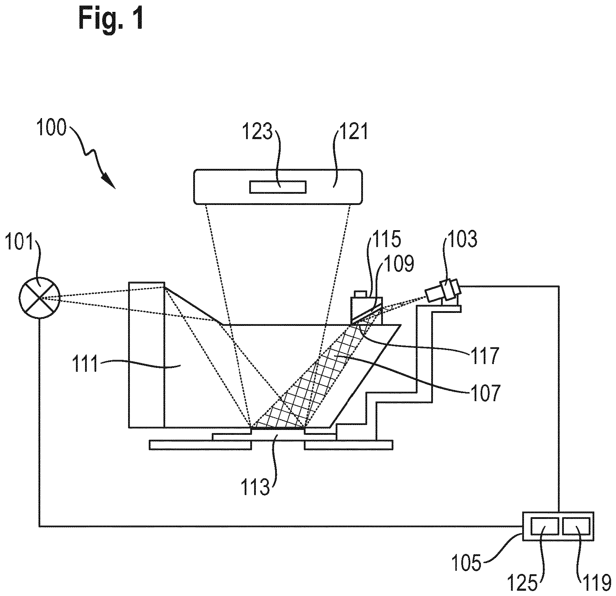

Fig. 1 zeigt eine schematische Darstellung eines Stereolithografiegerätes 100. Das Stereolithografiegerät 100 dient zum Herstellen von Werkstücken mittels eines dreidimensionalen Druckverfahrens (3D-Druck). Das Werkstück befindet sich hierzu in einem Flüssigbad aus einem lichtaushärtenden Material, wie beispielsweise einem Photopolymer, das schrittweise aufgebaut wird. Bei jedem Schritt wird ein spezielles Lichtmuster 123 auf das lichtaushärtende Material 121 projiziert. An den Stellen, an denen das Lichtmuster 123 auf das lichtaushärtende Material trifft, härtet dieses aus und wird fest. Auf diese Weise kann das Werkstück schichtweise mit der gewünschten Form hergestellt werden.

Das Stereolithografiegerät 100 umfasst eine Lichtquelle 101, wie beispielsweise eine Ultraviolett-LED (UV-LED), die zum Erzeugen des Lichtes dient, das das Material aushärtet. Weiter umfasst das Stereolithografiegerät 100 einen geschlossenen Regelkreis (Closed Loop), mit dem die Lichtintensität gemessen wird und eine Kompensation der Lichtintensität anhand der gewonnenen Messdaten durchgeführt wird. Auf diese Weise kann ein geschlossener Regelkreis realisiert werden, der eine genaue Einstellung der Lichtintensität über die gesamte Lebensdauer des Stereolithografiegerätes 100 anhand eines voreingestellten Sollwertes ermöglicht und mit dem Alterungseffekte der optischen Komponenten kompensiert werden können. Zusätzlich kann mittels eines Temperaturfühlers der Widerstand der Leuchtdiode gemessen werden und die Bestromung entsprechend angepasst werden, so dass sich zusätzlich die Lebensdauer der Leuchtdiode erhöht. Steigt beispielsweise die gemessene Temperatur, sinkt der Widerstand der Leuchtdiode. In diesem Fall würde ein zu hoher Strom durch die Leuchtdiode fließen.

Zu diesem Zweck wird das von der Lichtquelle 101 ausgesendete Licht beispielsweise mit einem digitalen Spiegelgerät (Digital Micromirror Device - DMD) 113 auf einen Auskopplungslichtpfad 107 gelenkt. Das Digital Micromirror Device 113 umfasst eine Vielzahl von matrixförmig angeordneten Mikrospiegelaktoren, die einzeln mittels elektrischer Spannungen ansteuerbar sind und verkippt werden können. Jeder einzelne dieser Mikrospiegelaktoren kann daher das auftreffende Licht in Richtung des lichtaushärtenden Materials 121 oder in Richtung des Auskopplungslichtpfades 107 auf den Sensor 103 lenken. Auf diese Wiese lassen sich die Lichtmuster 123 erzeugen, die das lichtaushärtende Material 121 verfestigen.

Dadurch kann das gesamte Licht oder lediglich bestimmte Lichtmuster auf den Sensor 103 gelenkt werden. Eine Auskopplung des Lichts kann lediglich für eine bestimmte vordefinierte Zeitdauer während einem Kalibriervorgang erfolgen, so dass der Sensor 103 nur in diesem Zeitraum der Beleuchtung ausgesetzt ist. Der Kalibriervorgang kann beispielsweise nach jeder Schicht (Slice) während eines Bauprozesses, nach einer vorgegebenen Anzahl von Schichten (Iterationen), nach jedem Bauteil oder nach jedem Wartungsvorgang oder Service durchgeführt werden.

Über eine reflektierende Spiegelfläche 109 beim Niederhalter 115 der Prismablende 117 wird das ausgekoppelte Licht auf den Sensor 103 gelenkt. Die Prismablende 117 definiert eine flächenmäßig vorgegebene Austrittsöffnung auf der Oberfläche des Prismas 111, so dass der Auskopplungslichtpfad 107 seitlich begrenzt und so das ungewollte Streulicht reduziert wird. Durch die Spiegelfläche 109 wird das Licht auf den Sensor 103 umgelenkt, so dass dieser direkt oberhalb des Prismas 111 angeordnet sein kann. Dadurch lässt sich der Sensor 103 auch an Stellen innerhalb des Stereolithografiegerätes 100 anordnen, die nicht in der ursprünglichen Ausbreitungsrichtung des Auskopplungslichtpfades 107 liegen.

Der Sensor 103 ist derart ausgebildet, dass dieser speziell für das beim Stereolithographieverfahren eingesetzte Licht geeignet ist und keine Verschlechterung der Messung über die Lebensdauer hinweg auftritt. Hierzu ist der Sensor 103 beispielsweise aus einer Photodiode gebildet. Im Allgemeinen können aber auch andere Sensoren 103 verwendet werden.

Die Messunsicherheit wird dadurch kompensiert, dass beim Messvorgang der gemessene Istwert der Lichtintensität als Führungsgröße beispielsweise in einen PID-Regler (Proportional-Integral-Derivative Controller) 119 geführt wird, der in einer Steuereinheit 105 angeordnet ist. Der PID-Regler ist eine Kombination aus einem proportional wirkenden Regler (P-Regler), einem integralwirkenden Regler (I-Regler) und einem differential wirkenden Regler (D-Regler).

Der proportionalwirkende Regler multipliziert die Regelabweichung mit seinem Verstärkungsfaktor. Der integralwirkende Regler summiert die Regelabweichung über der Zeit auf und multipliziert die Summe (d.h. das Integral) mit einem Faktor. Der differential wirkende Regler bewertet (differenziert) die Änderung einer Regelabweichung und berechnet so deren Änderungsgeschwindigkeit. Der PID-geregelte Kreis ermöglicht eine genaue und schnelle Stromeinstellung auf den vorgegebenen Sollwert. Im Allgemeinen können aber auch andere Regler zum Einregeln der Lichtintensität verwendet werden.

Der Sollwert kann als digitaler Wert bei der Herstellung des Stereolithografiegerätes 100 gerätespezifisch in einem nichtflüchtigen Datenspeicher 125 abgespeichert werden, wie beispielsweise einem Flash-Speicher. Der Istwert der Lichtintensität kann ebenfalls digital erfasst werden und mit dem gespeicherten Sollwert verglichen werden. Je nach Abweichung zwischen dem Istwert und dem Sollwert kann der elektrische Strom durch die Lichtquelle 101 solange erhöht oder verringert werden, bis der Istwert der Lichtintensität dem gespeicherten Sollwert entspricht. Die Anpassung des Stromwertes kann beispielsweise über eine Pulsbreitenmodulation oder Amplitudenmodulation erfolgen.

Durch den elektronischen PID-Regler oder PI-Regler 119 wird somit die Lichtintensität mittels einer Stromregelung für die Lichtquelle 101 auf den geforderten Sollwert geregelt. Auf diese Weise können eine Alterungskompensation und ein Kalibrierungsvorgang über den PID-Regler 119 schnell und effizient durchgeführt werden. Im Allgemeinen sind jedoch auch andere Regelmechanismen mit geschlossener Schleife möglich, um die Lichtintensität des Stereolithografiegerätes 100 auf einen vorgegebenen Sollwert einzuregeln.

Während der Messung regelt der PID-Regler 119 die Lichtintensität der Lichtquelle 101, bis diese den vorgegebenen Sollwert erreicht. Dieser Sollwert dient als Referenzwert und wird beispielsweise bei der anfänglichen Kalibrierung des Stereolithografiegerätes 100 in der Produktion bestimmt. Der für das Erreichen des Sollwertes nötige Stromwert wird von der Steuereinheit 105 an das Stereolithografiegerät 100 zurückgegeben und als neuer Referenzwert für den Strom benutzt.

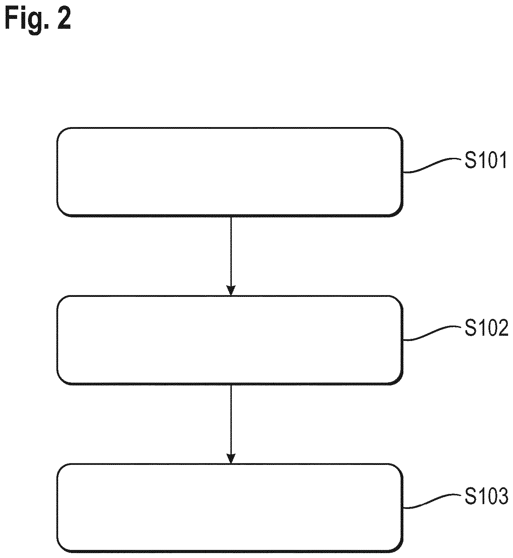

Fig. 2 zeigt ein Blockdiagramm eines Verfahrens zum Einstellen des Stereolithografiegerätes 100. In Schritt S101 wird Licht zum Aushärten des lichtaushärtenden Materials 121 mittels der Lichtquelle 101 ausgesandt. Anschließend wird in Schritt S102 der Istwert der Lichtintensität des ausgesandten Lichtes durch den Sensor 103 bestimmt. In Schritt S103 wird der elektrische Strom durch die Lichtquelle 101 solange erhöht oder verringert, bis der Istwert der Lichtintensität den vorgegebenen Sollwert erreicht. Durch das Verfahren lässt sich die Lichtintensität zum Aushärten des lichtaushärtenden Materials 121 exakt und zeitlich konstant auf die gewünschte Größe einstellen. Da der Sensor 103 nur einer geringen altersbedingten Verschlechterung unterliegt, kann die Lichtintensität mit hoher Genauigkeit auf einen vorgegebenen Wert eingeregelt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Stereolithografiegerät
- 101: Lichtquelle
- 103: Sensor
- 105: Steuereinheit
- 107: Auskopplungslichtpfad
- 109: Spiegelfläche
- 111: Prisma
- 113: digitales Spiegelgerät / Digital Micromirror Device
- 115: Niederhalter
- 117: Prismablende
- 119: PID-Regler
- 121: lichtaushärtendes Material
- 123: Lichtmuster
- 125: Datenspeicher

## Patentansprüche

1. Stereolithografiegerät (100), mit:
einer Lichtquelle (101) zum Aussenden von Licht zum Aushärten eines lichtaushärtenden Materials (121);
einem Sensor (103) zum Bestimmen eines Istwertes der Lichtintensität des ausgesandten Lichtes; und
einer Steuereinheit (105) zum Anpassen des elektrischen Stromes durch die Lichtquelle (101) bis der Istwert der Lichtintensität einen vorgegebenen Sollwert erreicht;
wobei das Stereolithografiegerät (100) ausgebildet ist, das Licht von der Lichtquelle (101) zum Sensor (103) über ein digitales Spiegelgerät (113) umzulenken, das zur Projektion eines Lichtmusters (123) auf das lichtaushärtende Material (121) dient, und wobei das Stereolithografiegerät (100) so angepasst ist, dass eine Auskopplung des Lichts lediglich für eine bestimmte vordefinierte Zeitdauer während einem Kalibriervorgang erfolgt, so dass der Sensor (103) nur in diesem Zeitraum der Beleuchtung ausgesetzt ist.

2. Stereolithografiegerät (100) nach Anspruch 1, wobei das digitale Spiegelgerät (113) benachbart zu einer Prismafläche angeordnet ist.

3. Stereolithografiegerät (100) nach Anspruch 1 oder 2, wobei das Stereolithografiegerät (100) ausgebildet ist, ein vorgegebenes Lichtmuster durch das digitale Spiegelgerät (113) auf den Sensor (103) zu projizieren.

4. Stereolithografiegerät (100) nach einem der vorangehenden Ansprüche, wobei das Stereolithografiegerät (100) eine Spiegelfläche (109) zum Umlenken des Lichts auf den Sensor (103) umfasst.

5. Stereolithografiegerät (100) nach Anspruch 4, wobei die Spiegelfläche (109) benachbart zu einer Prismablende (117) angeordnet ist.

6. Stereolithografiegerät (100) nach einem der vorangehenden Ansprüche, wobei der Sensor (103) speziell zum Erfassen von dem im Stereolithografiegerät eingesetzten Lichtspektrum ausgebildet ist.

7. Stereolithografiegerät (100) nach Anspruch 6, wobei der Sensor (103) durch eine Photodiode gebildet ist.

8. Stereolithografiegerät (100) nach einem der vorangehenden Ansprüche, wobei die Steuereinheit (105) einen Regler (119) zum Regeln des Stromes durch die Lichtquelle (101) umfasst.

9. Verfahren zum Einstellen eines Stereolithografiegerätes (100), mit den Schritten:
- Aussenden (S101) von Licht zum Aushärten eines lichtaushärtenden Materials (121) mittels einer Lichtquelle (101) ;
- Bestimmen (S102) eines Istwertes der Lichtintensität des ausgesandten Lichtes; und
- Anpassen (S103) des elektrischen Stromes durch die Lichtquelle (101) bis der Istwert der Lichtintensität einen vorgegebenen Sollwert erreicht;
wobei das Licht von der Lichtquelle (101) zum Sensor (103) durch ein digitales Spiegelgerät (113) umgelenkt wird, das zur Projektion eines Lichtmusters (123) auf das lichtaushärtende Material (121) dient und eine Auskopplung des Lichts lediglich für eine bestimmte vordefinierte Zeitdauer während einem Kalibriervorgang erfolgt, so dass der Sensor (103) nur ein diesem Zeitraum der Beleuchtung ausgesetzt ist.

10. Verfahren nach Anspruch 9, wobei ein vorgegebenes Lichtmuster durch das digitale Spiegelgerät (113) auf den Sensor (103) projiziert wird.

11. Verfahren nach einem der Ansprüche 9 oder 10, wobei das Licht über eine Spiegelfläche (109) auf den Sensor (103) umgelenkt wird.

12. Verfahren nach einem der Ansprüche 9 bis 11, wobei der Strom durch einen Regler (119) auf den Sollwert geregelt wird.

13. Verfahren nach einem der Ansprüche 9 bis 12, wobei das Licht durch eine Prismablende (117) geführt wird.

## Claims

1. Stereolithography apparatus (100), comprising:
a light source (101) for emitting light to cure a photocurable material (121);
a sensor (103) for determining an actual value of the light intensity of the emitted light; and
a control unit (105) for adjusting the electric current through the light source (101) until the actual value of the light intensity reaches a predetermined target value;
wherein the stereolithography apparatus (100) is adapted to redirect the light from the light source (101) to the sensor (103) via a digital mirror device (113) which serves to project a light pattern (123) onto the light-curing material (121), and wherein the stereolithography apparatus (100) is adapted to couple out the light only for a certain predefined period of time during a calibration process, so that the sensor (103) is exposed to illumination only during this period of time.

2. Stereolithography apparatus (100) according to claim 1, wherein the digital mirror device (113) is arranged adjacent to a prism surface.

3. Stereolithography apparatus (100) according to claim 1 or 2, wherein the stereolithography apparatus (100) is adapted to project a predetermined light pattern through the digital mirror device (113) onto the sensor (103).

4. Stereolithography apparatus (100) according to any one of the preceding claims, wherein the stereolithography apparatus (100) comprises a mirror surface (109) for redirecting the light onto the sensor (103).

5. Stereolithography apparatus (100) according to claim 4, wherein the mirror surface (109) is arranged adjacent to a prism aperture (117).

6. Stereolithography apparatus (100) according to any one of the preceding claims, wherein the sensor (103) is specifically designed to detect light spectrum used in the stereolithography apparatus.

7. Stereolithography apparatus (100) according to claim 6, wherein the sensor (103) is formed by a photodiode.

8. Stereolithography apparatus (100) according to any one of the preceding claims, wherein the control unit (105) comprises a regulator (119) for regulating the current through the light source (101).

9. Method of adjusting a stereolithography apparatus (100), comprising the steps:
- Emitting (S101) light to cure a photocurable material (121) by means of a light source (101);
- Determining (S102) an actual value of the light intensity of the emitted light; and
- Adjusting (S103) the electric current through the light source (101) until the actual value of the light intensity reaches a predetermined desired value;
wherein the light is redirected from the light source (101) to the sensor (103) by a digital mirror device (113) used to project a light pattern (123) onto the light-curing material (121), and decoupling of the light occurs only for a certain predefined period of time during a calibration process so that the sensor (103) is exposed to illumination only for that period of time.

10. Method according to claim 9, wherein a predetermined light pattern is projected onto the sensor (103) by the digital mirror device (113).

11. Method according to any one of claims 9 or 10, wherein the light is redirected onto the sensor (103) via a mirror surface (109) .

12. Method according to any one of claims 9 to 11, wherein the current is controlled to the target value by a controller (119) .

13. Method according to any one of claims 9 to 12, wherein the light is guided through a prism aperture (117).

## Revendications

1. Appareil de stéréolithographie (100), comprenant :
une source de lumière (101) pour émettre de la lumière afin de durcir un matériau photodurcissable (121) ;
un capteur (103) pour déterminer une valeur réelle de l'intensité lumineuse de la lumière émise; et
une unité de commande (105) pour adapter le courant électrique traversant la source de lumière (101) jusqu'à ce que la valeur réelle de l'intensité lumineuse atteigne une valeur prescrite prédéterminée;
l'appareil de stéréolithographie (100) étant conçu pour dévier la lumière de la source de lumière (101) vers le capteur (103) par l'intermédiaire d'un matrice de micro-miroirs (113) qui sert à projeter un motif lumineux (123) sur le matériau photodurcissable (121), et l'appareil de stéréolithographie (100) étant adapté de telle sorte qu'un découplage de la lumière n'a lieu que pendant une certaine durée prédéfinie pendant un procédure de calibrage, de sorte que le capteur (103) n'est exposé à l'éclairage que pendant cette durée.

2. Appareil de stéréolithographie (100) selon la revendication 1, dans lequel la matrice de micro-miroirs (113) est disposé à proximité d'une surface de prisme.

3. Appareil de stéréolithographie (100) selon la revendication 1 ou 2, dans lequel l'appareil de stéréolithographie (100) est conçu pour projeter un motif lumineux prédéterminé sur le capteur (103) à travers l'appareil à miroir numérique (113).

4. Appareil de stéréolithographie (100) selon l'une des revendications précédentes, dans lequel l'appareil de stéréolithographie (100) comprend une surface de miroir (109) pour dévier la lumière sur le capteur (103).

5. Appareil de stéréolithographie (100) selon la revendication 4, dans lequel la surface de miroir (109) est disposée à proximité d'une iris de prisme (117).

6. Appareil de stéréolithographie (100) selon l'une des revendications précédentes, dans lequel le capteur (103) est spécialement conçu pour détecter le spectre lumineux utilisé dans l'appareil de stéréolithographie.

7. Appareil de stéréolithographie (100) selon la revendication 6, dans lequel le capteur (103) est formé par une photodiode.

8. Appareil de stéréolithographie (100) selon l'une des revendications précédentes, dans lequel l'unité de commande (105) comprend un régulateur (119) pour réguler le courant traversant la source de lumière (101).

9. Procédé de réglage d'un appareil de stéréolithographie (100), comprenant les étapes suivantes :
- émettre (S101) de lumière pour durcir un matériau photodurcissable (121) au moyen d'une source de lumière (101) ;
- déterminer (S102) une valeur réelle de l'intensité lumineuse de la lumière émise; et
- adapter (S103) le courant électrique traversant la source de lumière (101) jusqu'à ce que la valeur réelle de l'intensité lumineuse atteigne une valeur prescrite prédéterminée;
dans lequel la lumière est déviée de la source de lumière (101) vers le capteur (103) par un matrice de micro-miroirs (113) qui sert à projeter un motif lumineux (123) sur le matériau photodurcissable (121) et un découplage de la lumière n'a lieu que pendant une certaine durée prédéfinie pendant une procédure de calibrage, de sorte que le capteur (103) n'est exposé à l'éclairage que pendant cette durée.

10. Procédé selon la revendication 9, dans lequel un motif lumineux prédéterminé est projeté sur le capteur (103) par la matrice de micro-miroirs (113).

11. Procédé selon l'une des revendications 9 ou 10, dans lequel la lumière est dévie vers le capteur (103) via une surface de miroir (109).

12. Procédé selon l'une des revendications 9 à 11, dans lequel le courant est régulé à la valeur prescrite par un régulateur (119).

13. Procédé selon l'une des revendications 9 à 12, dans lequel la lumière est guidée à travers une iris de prisme (117).
